# EUROPÄISCHE PATENTSCHRIFT

(11) **EP 0 921 127 B1**
(45) Veröffentlichungstag und Bekanntmachung des Hinweises auf die Patenterteilung: **19.04.2000**
(21) Anmeldenummer: 98118105.0
(22) Anmeldetag: 24.09.1998
(51) Int. Cl.: C07F 7/10, C01C 1/16

(54) **Verfahren zur Herstellung von Organosilazanen**
Process for preparing organosilazanes
Procédé pour la préparation d'organosilazanes

(30) Priorität: 02.12.1997 DE 19753480
(43) Veröffentlichungstag der Anmeldung: 09.06.1999
(73) Patentinhaber: Wacker-Chemie GmbH, 81737 München (DE)
(72) Erfinder: Weidner, Richard, 84489 Burghausen (DE); Benischke, Walter, 84561 Mehring (DE); Uhlendorf, Günther, 84489 Burghausen (DE)
(74) Vertreter: Fritz, Helmut, Dr.

(56) Entgegenhaltungen:
- DE-A- 2 645 703
- DE-A- 2 645 792
- GB-A- 2 014 171
- US-A- 4 644 076

## Beschreibung

Die Erfindung betrifft ein Verfahren zur Herstellung von Organosilazan und Ammonchlorid.

DE 26 45 703 B2 beschreibt ein Verfahren zur Herstellung von Hexamethyldisilazan durch Umsetzung von Trimethylchlorsilan mit gasförmigem Ammoniak in Gegenwart von Hexamethyldisilazan als Lösungsmittel. Das bei der Reaktion gebildete Ammonchlorid wird durch Auswaschen mit Wasser vom Hexamethyldisilazan abgetrennt. Das Hexamethyldisilazan wird anschließend mit Natriumsulfat getrocknet und das Natriumsulfat abfiltriert. Der Nachteil dieser Vorgehensweise bei der Salzabtrennung besteht darin, daß beim Auswaschen mit Wasser eine teilweise Hydrolyse des Hexamethyldisilazans erfolgt und somit Ausbeuteverluste auftreten, das Silazan nachbehandelt und filtriert werden muß und das Ammonchlorid als wässrige Lösung in einer nicht wiederverwertbaren Form anfällt.

In DE 26 45 792 C2 wird das Ammonchlorid vom Hexamethyldisilazan durch Destillation bei einer Sumpftemperatur unter 75 °C und verringertem Druck abgetrennt. Durch die gewählten Destillationsbedingungen wird vermieden, daß größere Mengen Ammonchlorid beim Abdestillieren des Hexamethyldisilazans sublimieren und dabei die Leitungswege verstopfen. Das nach der Destillation im Reaktor verbliebene Ammonchlorid, welches noch Reste an Hexamethyldisilazan enthält, wird durch Zugabe von verdünnter Salzsäure aufgelöst. Das restliche Hexamethyldisilazan reagiert dabei zu Hexamethyldisiloxan und wird als leichtere Phase vom wässrigen Ammonchlorid abgetrennt. Dieses Verfahren der Salzabtrennung hat den Nachteil, daß das Hexamethyldisilazan destillativ vom Ammonchlorid und damit sehr aufwendig entfernt werden muß. Des weiteren ist es für den Fachmann sofort ersichtlich, daß diese Art der Abtrennung im produktionstechnischen Maßstab kaum realisierbar ist, da im Reaktor als Rückstand festes, nicht mehr rührfähiges Ammonchlorid anfällt, welches folglich noch Hexamethyldisilazan enthält und somit Ausbeuteverluste an Hexamethyldisilazan auftreten. Schließlich fällt auch hier Ammonchlorid als wässrige Lösung an.

Eine weitere Möglichkeit der Salzabtrennung besteht darin, daß man das Ammonchlorid mittels Filtration oder Zentrifugalabtrennung aus der Reaktionsmischung entfernt. Das noch Hexamethyldisilazan haltige Ammonchlorid wird dann in verdünnter Salzsäure gelöst, wobei wiederum Hexamethyldisiloxan entsteht und Ammonchlorid als wässrige Lösung anfällt. Auch bei dieser Vorgehensweise treten Ausbeuteverluste an Hexamethyldisilazan auf, da bei der Filtration oder Zentrifugalabtrennung erhebliche Anteile an Hexamethyldisilazan im Ammonchlorid verbleiben.

Versuche, die Ausbeute an Hexamethyldisilazan dadurch zu erhöhen, daß man aus dem Ammonchlorid, wie es bei der Filtration bzw. Zentrifugalabtrennung anfällt, das enthaltene Hexamethyldisilazan nachträglich etwa durch Trocknung entfernt, scheitern im produktionstechnischem Maßstab, da das Ammonchlorid während des Trocknungsprozesses mit herkömmlichen Trocknungseinrichtungen zu größeren, sehr harten Agglomeraten sintert, welche technisch nicht mehr gehandhabt werden können und des weiteren eine vollständige Entfernung des Hexamethyldisilazans unmöglich machen.

All die bestehenden Verfahren haben den Nachteil, daß Ausbeuteverluste an Hexamethyldisilazan auftreten und das entstehende Ammonchlorid als wässrige Lösung anfällt, welche mit siliciumorganischen Stoffen kontaminiert ist und folglich vor Abgabe an die Umwelt einer weiteren Reinigung, etwa durch biologische Verfahren, zugeführt werden muß. Eine Rückgewinnung von Ammonchlorid ist nicht oder nur mit einem erheblichen und damit unwirtschaftlichen Aufwand möglich.

Ammonchlorid ist ein wertvoller Rohstoff u.a. für den Düngemittel sektor, für den Sprengstoffbereich und zur Herstellung von Zink/Ammonchlorid-Schmelzen. Des weiteren wird Ammonchlorid als Stickstofflieferant in kommunalen biologischen Kläranlagen eingesetzt.

Es bestand die Aufgabe, die Nachteile des Standes der Technik zu überwinden und insbesondere ein einfaches, wirtschaftliches und umweltbewußtes Verfahren zur Herstellung von Organosilazanen bereitzustellen, bei dem keine Ausbeuteverluste an den Organosilazanen auftreten und das Ammonchlorid in fester, reiner und handhabbarer, d.h. rieselfähiger und blockstabiler Form gewonnen wird, um es den obengenannten Einsatzzwecken zugänglich zu machen.

Gegenstand der Erfindung ist ein Verfahren zur Herstellung von Organosilazan und Ammonchlorid, wobei ein Organochlorsilan und Ammoniak in Gegenwart von Organosilazan als Lösungsmittel umgesetzt wird, dadurch gekennzeichnet, daß aus der entstandenen Mischung enthaltend Organosilazan und Ammonchlorid, Ammonchlorid abgetrennt wird, wobei vor der Abtrennung zur Mischung, oder nach der Abtrennung zum Ammonchlorid, ein Antiblockmittel hinzugefügt wird.

Bei dem Organosilan handelt es sich vorzugsweise um Trimethylchlorsilan oder Vinyldimethylchlorsilan oder deren Mischungen.

Das Organosilazan, das als Lösungsmittel dient, ist vorzugsweise das gleiche Organosilazan, das hergestellt werden soll. Hergestellt wird vorzugsweise nach dem erfindungsgemäßen Verfahren Hexamethydisilazan oder 1,3-Divinyl-tetramethyldisilazan.

Bei der Abtrennung wird das jeweilige Organosilazan vom Ammonchlorid getrennt.

Abtrennverfahren sind thermische Verfahren oder die Kombination von mechanischen Verfahren und thermischen Verfahren, wobei die Kombination von mechanischen Verfahren und thermischen Verfahren bevorzugt ist. Bei der Kombination von mechanischen und thermischen Verfahren wird das mechanische Verfahren vor dem thermischen Verfahren durchgeführt.

Bei den mechanischen Verfahren handelt es sich vorzugsweise um Filtration- oder Zentrifugaltrennung, wobei die Zentrifugaltrennung und hier insbesondere die Verwendung einer Schälzentrifuge besonders bevorzugt ist.

Werden mechanische Verfahren angewendet, so werden aus der Notwendigkeit, daß zur Durchführung des unten beschriebenen Granulierschrittes ein Restgehalt an Organosilazan im Ammonchlorid notwendig ist, diese in der Weise ausgeführt, daß der Anteil an Organosilazan im Ammonchlorid nach der mechanischen Abtrennung im Bereich zwischen vorzugsweise 10 und 25 Gew.% liegt.

Thermische Verfahren zur Abtrennung sind vorzugsweise Verfahren zur Trocknung, wobei das Organosilazan vollständig wiedergewonnen wird. Zur Trocknung geeignete Vorrichtungen sind beispielsweise Dünnschichttrockner, Wirbelschichttrockner, Sprühtrockner, Bandtrockner und Walzentrockner, wobei diese Trockner vorzugsweise verwendet werden, wenn das Antiblockmittel vor der Abtrennung zur Mischung hinzugefügt wird und die Abtrennung durch thermische Verfahren erfolgt. Weitere zur Trocknung geeignete Vorrichtungen sind Trockner, mit denen feste Materialen getrocknet werden können. Dazu gehören beispielsweise Tellertrockner, Trommeltrockner, Taumeltrockner, Doppelkonustrockner und Schaufeltrockner, wobei Tellertrockner bevorzugt sind. Diese Trockner werden vorzugsweise verwendet, wenn die Abtrennung durch Kombination von mechanischen und thermischen Verfahren erfolgt. Erfolgt die Abtrennung durch Kombination von mechanischen und thermischen Verfahren, so kann, falls der unten beschriebene Granulierschritt nicht ausgeführt wird und die Zugabe des Antiblockmittels vor der Abtrennung erfolgt, die Abtrennung auch nur mit einer einzigen Vorrichtung erfolgen. Derartige Vorrichtungen sind beispielsweise beheizbare Filtertrockner, Filternutschentrockner und Zentrifugentrockner.

Die Trocknung wird vorzugsweise bei einer Temperatur von 50 bis 150 °C und einem Druck von 5 bis 1000 hPa, besonders bevorzugt bei 65 bis 130 °C und 10 bis 500 hPa durchgeführt.

Der Gehalt an Organosilazan im Ammonchlorid nach der Trocknung liegt vorzugsweise unter 500 ppm, besonders bevorzugt unter 350 ppm.

Das Antiblockmittel wird bezogen auf Ammonchlorid in Mengen von vorzugsweise 0,05 bis 10 Gew.%, bevorzugt in Mengen von 0,05 bis 3 Gew.%, besonders bevorzugt in Mengen von 0,1 bis 2 Gew.% zugegeben.

Es können dabei nur eine Art von Antiblockmittel, jedoch auch verschiedene Arten von Antiblockmittel oder auch deren Gemische zugegeben werden.

Als Antiblockmittel werden vorzugsweise anorganische, feste Stoffe mit mittleren Teilchengrößen von 0,01 bis 50 µm verwendet. Dazu gehören beispielsweise Aluminiumsilicate, kolloidales Siliciumdioxidgel, pyrogen erzeugtes Siliciumdioxid, gemahlene Tone, Perlite, Vermiculite, Leichtspat, Talkum, Zemente, Kreidepulver, Calcium/Magnesium-Mischcarbonate oder Diatomeenerde, wobei pyrogen erzeugtes Siliciumdioxid bevorzugt ist.

Die Umsetzung von Organochlorsilan und Ammoniak in Gegenwart von Organosilazan als Lösungsmittel kann beispielsweise nach dem in DE 26 45 703 B2 beschriebenen Verfahren erfolgen.

Dabei wird in die Mischung aus Organochlorsilan und Organosilazan Ammoniak eingeleitet bis dieser nicht mehr absorbiert wird.

Gemäß dem erfindungsgemäßen Verfahren beträgt der Anteil an Ammonchlorid in der Reaktionsmischung nach der Umsetzung von Organochlorsilan und Ammoniak bevorzugt 10 bis 40 Gew.%, besonders bevorzugt 15 bis 28 Gew.%. Der Ammonchlorid-Gehalt kann auf einfache Weise über den Anteil an Organosilazan bei der Umsetzung eingestellt werden.

Zu dieser Reaktionsmischung kann ein oben beschriebenes Antiblockmittel hinzugefügt werden und dann die Abtrennung nach einem der oben beschriebenen Verfahren durchgeführt werden oder es kann zuerst die Abtrennung durchgeführt werden und danach ein Antiblockmittel, wie oben beschrieben zum Ammonchlorid hinzugefügt werden.

Falls das Antiblockmittel vor der Abtrennung des Ammonchlorids zugegeben wird, erfolgt die Abtrennung vorzugsweise thermisch nach einem der oben beschrieben Verfahren oder sie kann auch mechanisch nach einem der oben beschrieben Verfahren in Kombination mit einem thermischen Verfahren erfolgen, wobei die mechanische Abtrennung der thermischen Abtrennung immer voraus geht. Die Abtrennung durch Kombination von mechanischen und thermischen Verfahren ist bevorzugt.

Falls die Abtrennung durch Kombination von mechanischen und thermischen Verfahren erfolgt, kann nach der mechanischen Abtrennung noch ein Granulierschritt durchgeführt werden.

Die Granulierung des Organosilazan bzw. Organosilazan und Antiblockmittel enthaltenden Ammonchlorids erfolgt mit herkömmlichen Feuchtgranuliervorrichtungen.

Die maximalen Abmessungen der erhaltenen Granulätteilchen werden dabei durch die Lochgröße des verwendeten Granulierzylinders bestimmt. Bevorzugt werden Lochgrößen von 1 bis 10 mm und besonders bevorzugt von 2 bis 8 mm eingesetzt.

Falls das Antiblockmittel nach der Abtrennung hinzugegeben wird, erfolgt die Abtrennung des Ammonchlorids durch Kombination von mechanischen und thermischen Verfahren, wobei nach der mechanischen Abtrennung und vor der thermischen Abtrennung ein Granulierschritt, wie oben beschrieben erforderlich ist.

Vorzugsweise wird das getrocknete Ammonchlorid gemahlen, wobei es bevorzugt auf eine mittlere Teilchengröße (Gewichtsmittel) von 10 bis 600 µm, besonders bevorzugt von 20 bis 200 µm gemahlen wird.

Zur Mahlung können alle bekannten für derartige Zwecke verwendbaren Mahleinrichtungen zum Einsatz kommen. Dazu gehören beispielsweise Stiftmühlen, Schleudermühlen, Schwingmühlen, Strahlprallmühlen, Trommelmühlen, Konusmühlen, Zahnscheibenmühlen, Walzenmühlen, Kugelmühlen und Pendelmühlen.

Das erfindungsgemäße Verfahren hat den Vorteil, daß es im Produktionsmaßstab einfach durchzuführen ist, eine hohe Ausbeute an Organosilazan ergibt und umweltbewußt ist, da das erhaltene Ammonchlorid einer Wiederverwertung zugeführt werden kann.

Ein weiterer Vorteil besteht darin, daß das erhaltene Ammonchlorid eine hohe Blockfestigkeit und Rieselfähigkeit aufweist und damit auch nach längerer Lagerung keine Schwierigkeiten bei der Handhabung, etwa beim Entleeren aus Gebinden, auftreten.

Infolge des niedrigen Gehaltes an noch vorhandenem Organosilazan stellt das nach dem erfindungsgemäßen Verfahren hergestellte Ammonchlorid nach den gängigen Vorschriften ein Nichtgefahrgut dar und ist somit auf einfachere Weise einer universellen Wiederverwertung zuführbar.

Das nach den erfindungsgemäßen Verfahren hergestellte Ammonchlorid weist hinsichtlich des Gehaltes an umweltrelevanten Verunreinigungen wie etwa den Schwermetallen Blei, Cadmium, Chrom, Nickel, Zink, Kupfer und Quecksilber eine Reinheit auf, die herkömmlichem Ammonchlorid, wie es über den Chemikalienfachhandel vertrieben wird, vergleichbar ist.

Ein bevorzugtes erfindungsgemäßes Verfahren A zur Herstellung von Organosilazanen, insbesondere von Hexamethyldisilazan und 1,3-Divinyltetramethyldisilazan, erfolgt durch Umsetzung von Organochlorsilan und Ammoniak in Gegenwart von Organosilazan als Lösungsmittel, wobei das Organosilazan
in einer 1. Stufe vom gebildeten Ammonchlorid größtenteils abgetrennt wird,
in einer 2. Stufe das noch Organosilazan enthaltende Ammonchlorid granuliert wird,
in einer 3. Stufe das Granulat von noch enthaltenem Organosilazan unter dessen Rückgewinnung befreit wird,
in einer 4. Stufe mit einem Antiblockmittel versetzt wird,
wobei vor der 4. bzw. nach der 4. Stufe das Granulat gegebenenfalls gemahlen wird.

Ein weiteres erfindungsgemäßes Verfahren B zur Herstellung von Organosilazanen, insbesondere von Hexamethyldisilazan und 1,3-Divinyltetramethyldisilazan, erfolgt durch Umsetzung von Organochlorsilan und Ammoniak in Gegenwart von Organosilazan als Lösungsmittel, wobei
in einer 1. Stufe die Ammonchlorid haltige Reaktionsmischung mit Antiblockmittel versetzt wird,
in einer 2. Stufe das Organosilazan vom Ammonchlorid größtenteils abgetrennt wird,
gegebenenfalls in einer 3. Stufe das noch Organosilazan enthaltende Ammonchlorid granuliert wird,
in einer 4. Stufe von noch enthaltenem Organosilazan unter dessen Rückgewinnung befreit wird,
das erhaltene Ammonchlorid gegebenenfalls in einer 5. Stufe gemahlen wird und
gegebenenfalls in einer 6. Stufe mit weiterem Antiblockmittel versetzt wird.

Die Abtrennung des Organosilazans vom Ammonchlorid in der 2.Stufe von Verfahren B und in der 1. Stufe von Verfahren A erfolgt bevorzugt durch die oben beschriebenen mechanischen Verfahren.

Für den Fall, daß bei Verfahren B die 3. Stufe nicht ausgeführt wird, so können die 2.Stufe und die 4.Stufe in der Weise miteinander kombiniert werden, daß die Abtrennung des Ammonchlorids und dessen Befreiung von verbliebenem Organosilazan mittels einer einzigen Vorrichtung erfolgt. Dafür geeignet sind beispielsweise Vorrichtungen wie Filtertrockner, Filternutschentrockner und Zentrifugentrockner.

In den nachfolgenden Beispielen beziehen sich alle Angaben von Teilen und Prozentsätzen, soweit nicht anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20 °C, durchgeführt.

Das erhaltene Ammonchlorid wurde hinsichtlich seiner Blockfestigkeit beurteilt.

Zur Bestimmung der Blockfestigkeit wurde das zu untersuchende Material in ein Eisenrohr (Höhe: 100 mm; Durchmesser: 50 mm) mit Verschraubung gefüllt, danach mit einem 3 kg schweren Metallstempel (Durchmesser: 49 mm) belastet und anschließend im Trockenschrank 16 Stunden bei 50 °C gelagert. Nach Abkühlen auf Raumtemperatur wurde der Metallstempel vorsichtig entfernt, der Schraubverschluß geöffnet und das Material aus dem Rohr entfernt. Bei stark geblocktem Material wurde dieses vorsichtig mit Hilfe des Metallstempels aus dem Eisenrohr herausgedrückt. Die Blockfestigkeit wurde qualitativ durch Zerdrücken des Materials bestimmt und nach folgendem Bewertungsschema beurteilt:
1=Riesel- und schüttfähig
2=Pulver rieselt teilweise in Brocken unter Nachhilfe aus der Eisenröhre. Es bleiben einige Brocken erhalten, die beim Schütteln zerfallen.
3=Herausgedrückter Pulverzylinder zerfällt bereits teilweise. Restliche Brocken zerfallen mehlig bei leichtem Druck.
4=Herausgedrückter Pulverzylinder kann sehr leicht zerteilt werden. Entstehende Brocken können sehr leicht fast ohne Rückstand pulverig zerdrückt werden.
5=Herausgedrückter Pulverzylinder kann sehr leicht zerteilt werden. Es entstehen sehr wenige, sehr leicht zerteilbare Brocken.
6=Herausgedrückter Pulverzylinder kann leicht zerteilt werden. Es entstehen viele kleine und größere Brocken, die leicht zerteilt werden können.
7=Herausgedrückter Pulverzylinder kann leicht zerteilt werden. Es entstehen viele kleine und größere Brocken, die zerteilt werden können.
8=Herausgedrückter Pulverzylinder ist nur noch durch sehr starkes Drücken zerteilbar. Es bleiben viele kleine und größere harte Brocken erhalten.
9=Herausgedrückter Pulverzylinder kann nicht mehr durch Drücken zerteilt werden. Es verbleibt ein grobes, hartes und brockiges Material.
   - 1-3 =: Keinerlei Blockgefahr
   - 4-5 =: Kaum Blockgefahr
   - 6-7 =: Kritischer Bereich
   - 8-9 =: Material blockt

Der Gehalt an Organosilazan im Ammonchlorid wurde mittels ¹H-NMR bestimmt.

Die Bestimmung der mittleren Teilchengröße erfolgte mit einem LS Particle Size Analyzer (Coulter LS 130).

### Vergleichsbeispiel 1

In ein Reaktionsgefäß wurden 950 Gewichtsteile Trimethylchlorsilan sowie 1161 Gewichtsteile Hexamethyldisilazan gegeben. In dieses Gemisch wurde Ammoniak gasförmig eingeleitet. Die Reaktion wurde bei 20 °C begonnen, während des Einleitens von Ammoniak stieg die Temperatur auf 45 °C an. Das Reaktionsgemisch wurde dann durch Kühlung des Reaktionsgefäßes bei dieser Temperatur gehalten. Nach 90minütigem Einleiten von Ammoniak wurde kein Ammoniak mehr absorbiert. Dennoch wurde die Ammoniakzufuhr weitere 45 Minuten bei 45 °C weitergeführt. Danach wurde das Reaktionsgemisch auf Raumtemperatur gekühlt. Es wurde durch Umsetzung mit Ammoniak eine Mischung aus 80 Gew.% Hexamethyldisilazan und 20 Gew.% Ammonchlorid erzeugt (Dispersion A).

Aus dieser Mischung wurde das Hexamethyldisilazan mittels einer Schälzentrifuge abzentrifugiert. Das erhaltene Ammonchlorid (Ammonchlorid A) wies nach der Zentrifugalabtrennung einen Gehalt an Hexamethyldisilazan von 15,8 Gew.% auf.

300 g des Ammonchlorids A wurden anschließend am Rotationsverdampfer bei einer Temperatur von 110 °C und einem Vakuum von 50 hPa 2 Stunden getrocknet. Während der Trocknung verklumpte das Ammonchlorid zu unterschiedlich großen, sehr harten und formstabilen Teilchen.

Nach Pulverisierung wies das getrocknete Ammonchlorid einen mittleren Restgehalt an Hexamethyldisilazan von 3000 ppm und eine Blockfestigkeit von 8 auf.

Trocknungsversuche im produktionstechnischen Maßstab wurden ausgehend von Dispersion A bzw. Ammonchlorid A mit folgenden Trocknersystemen bei 110 °C und 50 hPa durchgeführt:
Vakuumtellertrockner (System VTT) der Fa. Krauss Maffei, D-München (Ammonchlorid A)
Vakuum-Filtertrockner der Fa. Rosemund, CH-Liesthal (Dispersion A)
Filternutschentrockner der Fa. Seitz Filterwerke, D-Bad Kreuznach (Dispersion A)
Vertikal-Horizontal-Dünnschichttrockner der Fa. Künzi, CH-Bubendorf (Dispersion A)
Titus-Zentrifugentrockner der Fa. Fima, D-Obersontheim (Dispersion A)

Bei allen Trocknertypen verbackte das Ammonchlorid nach kurzer Zeit zu harten Teilchen von Kirsch- bis Schneeballgröße bzw. beim Dünnschichttrockner bildeten sich zwischen Rotor und Wandung harte, allmählich verglasende Beläge, so daß in allen Fällen der Trocknungsprozeß unterbrochen werden mußte.

Nach Pulverisierung wies das erhaltene Ammonchlorid eine Blockfestigkeit von 8 auf.

### Beispiel 1

Ammonchlorid A wurde mit einem Granulator der Fa. Alexanderwerke (D-Remscheid) bei einer Lochgröße von 3 - 5 mm granuliert. Es wurde ein formstabiles Ammonchlorid-Granulat erhalten. Mittels des in Vergleichsbeispiel 1 verwendeten Vakuum-Tellertrockners der Fa. Krauss Maffei wurde anschließend das Granulat ohne technische Schwierigkeiten bei 110 °C und 50 hPa unter Wiedergewinnung des in Ammonchlorid A enthaltenen Hexamethyldisilazans getrocknet. Bei der Trocknung verbackte das Granulat nicht.

Nach Pulverisierung wies das erhaltene Ammonchlorid einen Gehalt an Hexamethyldisilazan von 250 ppm und eine Blockfestigkeit von 8 auf.

### Beispiel 2

Das in Beispiel 1 erhaltene, getrocknete Ammonchlorid wurde mit einer Doppelstiftmühle (Alpine Labor Condux) bei 34000 Umdrehungen pro Minute auf eine mittlere Teilchengröße von 66 µm (Gewichtsmittel) gemahlen und anschließend mit 0,5 % pyrogener Kieselsäure der Bezeichnung Wacker HDK® H 30 (käuflich erhältlich bei der Wacker-Chemie GmbH, D-München) mit einer BET-Oberfläche von 250 m²/g und einem Kohlenstoffgehalt von 1.9 % vermischt.

Das Kieselsäure haltige Ammonchlorid zeigte eine Blockfestigkeit von 2.

### Beispiel 3

In Dispersion A wurde bezogen auf enthaltenes Ammonchlorid 1 % pyrogene Kieselsäure der Bezeichnung Wacker HDK^{®} N 20 (käuflich erhältlich bei der Wacker-Chemie GmbH, D-München) mit einer BET-Oberfläche von 200 m²/g eingemischt. Anschließend wurde das Hexamethyldisilazan mittels einer Schälzentrifuge abzentrifugiert. Das erhaltene Kieselsäure haltige Ammonchlorid (Ammonchlorid B) wies nach der Zentrifugalabtrennung einen Gehalt an Hexamethyldisilazan von 16,5 Gew.% auf.

300 g des Ammonchlorids B wurden anschließend am Rotationsverdampfer bei einer Temperatur von 110 °C und einem Vakuum von 50 hPa 2 Stunden getrocknet. Während der Trocknung verklumpte das Ammonchlorid nicht. Es wurde ein pulvriges Produkt erhalten, welches einen mittleren Restgehalt an Hexamethyldisilazan von 120 ppm, eine Blockfestigkeit von 2 und eine mittlere Teilchengröße von 309 µm (Gewichtsmittel) aufwies.

### Beispiel 4

Ammonchlorid B wurde im produktionstechnischen Maßstab mit dem in Vergleichsbeispiel 1 verwendeten Vakuum-Tellertrockner der Fa. Krauss Maffei ohne technische Schwierigkeiten bei 110 °C und 50 hPa unter Wiedergewinnung des in Ammonchlorid B enthaltenen Hexamethyldisilazans getrocknet. Bei der Trocknung verbackte das Ammonchlorid nicht.

Es wurde ein pulvriges Produkt erhalten, welches einen mittleren Restgehalt an Hexamethyldisilazan von 140 ppm, eine Blockfestigkeit von 2 und eine mittlere Teilchengröße von 280 µm (Gewichtsmittel) aufwies.

### Beispiel 5

In Dispersion A wurde bezogen auf enthaltenes Ammonchlorid 0,5 % der in Beispiel 2 verwendeten pyrogenen Kieselsäure eingemischt. Anschließend wurde das Hexamethyldisilazan mittels einer Schälzentrifuge abzentrifugiert. Das erhaltene Kieselsäurehaltige Ammonchlorid (Ammonchlorid C) wies nach der Zentrifugalabtrennung einen Gehalt an Hexamethyldisilazan von 14,3 Gew.% auf.

Ammonchlorid C wurde analog Beispiel 1 granuliert. Trotz Kieselsäurezusatz wurde ein formstabiles Ammonchlorid-Granulat erhalten. Mittels des in Vergleichsbeispiel 1 verwendeten Vakuum-Tellertrockners der Fa. Krauss Maffei wurde das Granulat anschließend bei 110 °C und 50 hPa unter Wiedergewinnung des enthaltenen Hexamethyldisilazans getrocknet. Bei der Trocknung verbackte das Granulat nicht, zerfiel jedoch teilweise in kleinere Teilchen.
Das getrocknete Granulat wurde anschließend analog Beispiel 2 auf eine mittlere Teilchengröße von 64 um (Gewichtsmittel) gemahlen.

Die Bestimmung des Rest-Gehaltes an Hexamethyldisilazan ergab einen Wert von 210 ppm und die Bestimmung der Blockfestigkeit einen Wert von 3. Nach weiterer Zugabe von 0,5 % der in Beispiel 2 verwendeten pyrogenen Kieselsäure wurde ein rieselfähiges Pulver mit einer Blockfestigkeit von 1 erhalten.

### Beispiel 6

Das Kieselsäure haltige getrocknete Ammonchlorid aus Beispiel 2 wurde mittels AES (Atom-Emissions-Spektroskopie) hinsichtlich seines Gehaltes an Blei, Cadmium, Chrom, Nickel, Zink, Kupfer und Quecksilber untersucht. Bei allen Elementen lag der Anteil unter 5 ppm.

## Patentansprüche

1. Verfahren zur Herstellung von Organosilazan und Ammonchlorid, wobei ein Organochlorsilan und Ammoniak in Gegenwart von Organosilazan als Lösungsmittel umgesetzt wird, dadurch gekennzeichnet, daß aus der entstandenen Mischung enthaltend Organosilazan und Ammonchlorid, Ammonchlorid abgetrennt wird, wobei vor der Abtrennung zur Mischung, oder nach der Abtrennung zum Ammonchlorid, ein Antiblockmittel hinzugefügt wird.

2. Verfahren zur Herstellung von Organosilazan und Ammonchlorid nach Anspruch 1, dadurch gekennzeichnet, daß das Antiblockmittel vor der Abtrennung hinzugegeben wird und die vollständige Abtrennung des Ammonchlorids thermisch oder durch Kombination von mechanischen und thermischen Verfahren erfolgt.

3. Verfahren zur Herstellung von Organosilazan und Ammonchlorid nach Anspruch 2, dadurch gekennzeichnet, daß die Abtrennung durch Kombination von mechanischen und thermischen Verfahren erfolgt, und nach der mechanischen Abtrennung ein Granulierschritt durchgeführt wird.

4. Verfahren zur Herstellung von Organosilazan und Ammonchlorid nach Ansprüchen 2 oder 3, dadurch gekennzeichnet, daß nach der Abtrennung noch zusätzlich Antiblockmittel zum Ammonchlorid zugegeben wird.

5. Verfahren zur Herstellung von Organosilazan und Ammonchlorid nach Anspruch 1, dadurch gekennzeichnet, daß das Antiblockmittel nach der Abtrennung zum Ammonchlorid hinzugegeben wird und die Abtrennung des Ammonchlorids durch Kombination von mechanischen und thermischen Verfahren erfolgt und nach der mechanischen Abtrennung und vor der thermischen Abtrennung ein Granulierschritt durchgeführt wird.

## Claims

1. Process for preparing organosilazane and ammonium chloride, with reaction of an organochlorosilane and ammonia in the presence of organosilazane as solvent, characterized in that ammonium chloride is removed from the resulting mixture containing organosilazane and ammonium chloride, with addition of an antiblocking agent to the mixture before the removal, or to the ammonium chloride after the removal.

2. Process for preparing organosilazane and ammonium chloride according to Claim 1, characterized in that the antiblocking agent is added before the removal, and the complete removal of the ammonium chloride takes place thermally or by a combination of mechanical and thermal processes.

3. Process for preparing organosilazane and ammonium chloride according to Claim 2, characterized in that the removal takes place by a combination of mechanical and thermal processes, and a granulation step is carried out after the mechanical removal.

4. Process for preparing organosilazane and ammonium chloride according to Claim 2 or 3, characterized in that additionally antiblocking agent is added to the ammonium chloride after the removal.

5. Process for preparing organosilazane and ammonium chloride according to Claim 1, characterized in that the antiblocking agent is added to the ammonium chloride after the removal, and the removal of the ammonium chloride takes place by a combination of mechanical and thermal processes, and a granulation step is carried out after the mechanical removal and before the thermal removal.

## Revendications

1. Procédé de préparation d'un organosilazane et de chlorure d'ammonium, dans lequel on fait réagir un organochlorosilane et de l'ammoniac en présence d'un organosilazane en tant que solvant, caractérisé en ce que le chlorure d'ammonium est séparé du mélange résultant contenant de l'organosilazane et du chlorure d'ammonium, un agent anti-adhérent étant ajouté au mélange avant la séparation, ou au chlorure d'ammonium après la séparation.

2. Procédé de préparation d'un organosilazane et de chlorure d'ammonium selon la revendication 1, caractérisé en ce que l'agent anti-adhérent est ajouté avant la séparation et la séparation totale du chlorure d'ammonium est réalisée par voie thermique ou par une combinaison de procédés mécaniques et thermiques.

3. Procédé de préparation d'un organosilazane et de chlorure d'ammonium selon la revendication 2, caractérisé en ce que la séparation est réalisée par combinaison de procédés mécaniques et thermiques, et une étape de granulation est mise en oeuvre après la séparation mécanique.

4. Procédé de préparation d'un organosilazane et de chlorure d'ammonium selon les revendications 2 ou 3, caractérisé en ce que l'on ajoute en outre de l'agent anti-adhérent au chlorure d'ammonium après la séparation.

5. Procédé de préparation d'un organosilazane et d'un chlorure d'ammonium selon la revendication 1, caractérisé en ce que l'agent anti-adhérent est ajouté au chlorure d'ammonium après la séparation et la séparation du chlorure d'ammonium est réalisée par une combinaison de procédés mécaniques et thermiques, et une étape de granulation est mise en oeuvre après la séparation mécanique et avant la séparation thermique.
